# EUROPEAN PATENT APPLICATION

(11) **EP 4 343 803 A1**
(43) Date of publication of application: **27.03.2024**
(21) Application number: 23306377.5
(22) Date of filing: 14.08.2023
(51) Int. Cl.: H01H 11/00

(54) **ELECTRICAL DEVICE AND ELECTRICAL DEVICE SYSTEM**

(30) Priority: 17.08.2022 CN 202210985639
(71) Applicant: SCHNEIDER ELECTRIC INDUSTRIES SAS, 92500 Rueil-Malmaison (FR)
(72) Inventor: HUANG, Jie, Shanghai 201203 (CN); BI, Baoyun, Shanghai 201203 (CN)
(74) Representative: Manitz Finsterwald Patent- und Rechtsanwaltspartnerschaft mbB

(57) **Abstract**

The present disclosure provides an electrical device and an electrical device system. The electrical device comprises: an operating mechanism for implementing an operating function of the electrical device; a control module for controlling the operating mechanism; and an accessory mounting mechanism including one or more accessory slots for pluggable mounting of one or more accessory modules, wherein the accessory mounting mechanism comprises power supply coil(s) connected with the control module, the power supply coil(s) is/are used to wirelessly supply power to the one or more accessory modules under the control of the control module after the one or more accessory modules are inserted; and the power supply coil(s) is/are also used to implement communication between the control module and the accessory module while wirelessly supply power to the accessory module. The electrical device system comprises the electrical device and an accessory module including a power receiving coil for receiving wireless power supply from the electrical device through the power supply coil of the electrical device.

## Description

### TECHNICAL FIELD

The present disclosure relates to an electrical device and an electrical device system including the electrical device.

### BACKGROUND

For electrical products in industry, electric power, and other fields, for example, dual power switch device, it is very important that the products are highly reliable and safe. For example, the products need to be able to operate uninterruptedly with high quality under different operating conditions, with high safety for surrounding equipment and maintenance personnel, and be simple, safe, and low cost for post-product maintenance. In addition, it is also desirable to be able to maintain uninterrupted operation without dismantling any parts when carrying out maintenance on the product.

### SUMMARY

The disclosure provides a safe, stable and easy-to-maintain electrical device and electrical device system, which wirelessly supplies power to an accessory module, thereby avoiding the defects of wired power supply, such as limitations on the number of times of plugging and unplugging, poor contact, additional electrical insulation requirements and the like.

An aspect of the present disclosure provides an electrical device. The electrical device comprises: an operating mechanism for implementing an operating function of the electrical device, a control module for controlling the operating mechanism, and an accessory mounting mechanism including one or more accessory slots for pluggable mounting of one or more accessory modules. The accessory mounting mechanism comprises power supply coil(s) connected with the control module, the power supply coil(s) is/are used to wirelessly supply power to the one or more accessory modules under the control of the control module after the one or more accessory modules are inserted, and the power supply coil(s) is/are also used to implement communication between the control module and the accessory module while wirelessly supply power to the accessory module.

Optionally, the wirelessly supplying power uses Near Field Communication (NFC) technology.

Optionally, the power supply coil(s) is/are one power supply coil for wirelessly supplying power to the accessory modules in all accessory slots.

Optionally, the number of the power supply coil(s) is/are the same as the number of the accessory slots, and each accessory slot is provided with one power supply coil for wirelessly supplying power to one accessory module.

Optionally, the accessory mounting mechanism is provided with an insulating housing for isolating the power supply coil(s) from a power receiving coil of the accessory module.

Optionally, the control module detects whether there is a foreign object between a power receiving coil of the accessory module and the power supply coil(s) after the accessory module is inserted and prompts a user of the presence of the foreign object through the foreign object indication unit in the case the foreign object is present.

Optionally, the power supply exception signal indicates that a power supply voltage or current to the accessory module does not meet a predetermined condition or indicates that a temperature of the accessory module is abnormal.

Optionally, the electrical device is a dual power switch device.

Another aspect of the present disclosure provides an electrical device system. The electrical device system comprises the electrical device and an accessory module. The accessory module including a power receiving coil for receiving wireless power supply from the electrical device through the power supply coil of the electrical device.

Optionally, the power receiving coil of the accessory module is a Flexible Printed Circuit Board (FPC) coil, and the FPC coil is connected to a main PCB of the accessory module.

According to the embodiment of the present disclosure, the accessory module is wirelessly modularly connected with the electrical device, avoiding the problem of reliability of traditional connectors. This accessory module is simple to assemble, which is convenient for post-product maintenance and upgrading and updating. Moreover, non-contact wireless power supply and communication brings better system insulation and can avoid the risk of electric shock in case the power supply is a non-isolated system. In addition, according to the embodiment of the present disclosure, a group of coils is shared to implement functions of wireless power supply and wireless communication at the same time, thus saving design space and cost of coils.

### BRIEF DESCRIPTION OF DRAWINGS

The aspects, features and advantages of the present disclosure will become clearer and easier to understand from the following description of the embodiment in conjunction with the accompanying drawings, in which:
FIGS. 1A and 1B show two connections of accessory modules of the electrical device system in the prior art, respectively;
FIG. 2 shows a schematic block diagram of the electrical device according to an embodiment of the present disclosure;
FIGS. 3A and 3B show two structural schematic diagrams of the electrical device and the accessory module according to the embodiment of the present disclosure, respectively;
FIG. 4 shows a schematic flowchart of a method of supplying power of the electrical device system according to the embodiment of the present disclosure.

### DETAILED DESCRIPTION

The present disclosure will be described in detail below with reference to exemplary embodiment(s) of the present disclosure. However, the present disclosure is not limited to the embodiment(s) described herein, and it can be implemented in many different forms. The described embodiment is only used to make the present disclosure thorough and complete, and fully convey the idea of the present disclosure to those skilled in the art. Features of the various embodiments described may be combined or substituted with each other unless explicitly excluded or should be excluded according to the context.

Electrical products in industry, electric power, and other fields, for example, dual power switch device, can usually be equipped with one or more accessory modules in order to enable customization for users and upgrading and updating of the products. The accessory module is used to implement extended functions of electrical products. For example, the accessory module may be a dry contact control module, a firefighting module, a current transformer (CT) module, a temperature detection module, etc. These accessory modules can be mounted to a main device of the electrical product, powered by the main device, and can usually communicate with the main device. For example, the dry contact control module may be a module that provides dry contacts and controls the changes in the state of the dry contact. Dry contact is a passive switch, which has two states: closed and open. The dry contact control module may, for example, receive a control signal from the main device to switch the state of the dry contact. The firefighting module may be used to detect whether a fire has occurred in an application scenario. For example, the firefighting module may include a detection unit and a signal transmission unit, so that the firefighting module may report the occurrence of a fire to the main device through the signal transmission unit in the case that fire is detected. The current transformer module may be used for current detection, such as detecting the operating current of the electrical product and may send the detected current value to the main device. The temperature detection module may be used to detect the temperature, such as detecting the ambient temperature, and may send the detected temperature value to the main device.

In the present disclosure, the electrical product including an accessory module is referred to as the electrical device system, which includes the main device and the accessory module, and the main device is also referred to as the electrical device. For example, the electrical device may be the dual power switch device.

The accessory module is usually detachably mounted to the main device and powered by the main device. The traditional connection and power supply mode between the main device and the accessory module is wired, that is, the connecting conductor of the main device and the connecting conductor of the accessory module are connected electrically by direct contact, for example, by using connector, gold finger and so on.

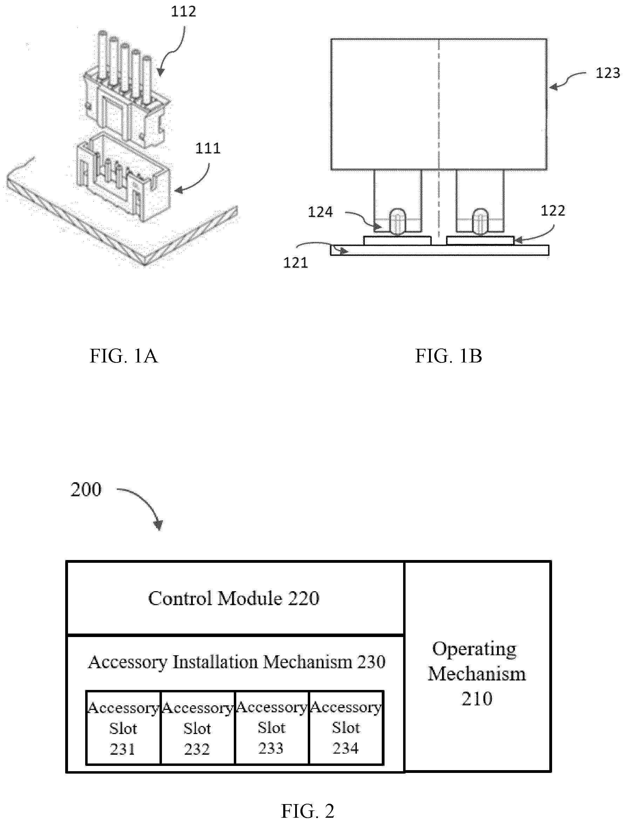

FIGS. 1A and 1B show two accessory connections of the electrical device system in the prior art-connector connection and gold finger connection, respectively.

The connection shown in FIG. 1A is the connector connection. In this connection, the lower connector portion 112 can be mounted on the main device, and the upper connector portion 111 can be mounted on the accessory module. When the accessory module needs to be mounted, the upper connector portion 111 is inserted into the lower connector portion 112, and the connecting conductors in the two connector portions are in contact each other to implement an electrical connection so that the main device can supply power to the accessory module and communicate with it.

The connection shown in FIG. 1B is the gold finger connection. In this connection, the lower part is a printed circuit board (PCB) 121 mounted on the main device and a metal contact pad 122 thereon, and the upper part is a contactor 123 mounted on the accessory module and their contacts 124. When the accessory module needs to be installed, the contacts 124 of the upper contactor 123 is pressed to the metal contact pads 122 below, so that the contacts 124 of the accessory module are electrically connected with the metal contact pads 122 of the main device, thereby the main device can supply power to the accessory module and communicate with it.

However, the above two traditional connections have the following disadvantages. First, the connectors themselves have a limit on the number of times of plugging and unplugging, which means that the number of times of plugging and unplugging between the accessory module and the main device is limited throughout the product life cycle. Second, if the accessory module is installed in an embedded manner, it is blind mated in most cases, which will lead to problems such as unreliable contact, misaligned connection and connector breakage. Third, connectors can bring about problems of unstable power supply or communication due to hot-plug during the plugging and unplugging process. Fourth, in order to ensure the reliability of the connection, there are requirements for the material of the contact surface of the connector. Generally, for the accessory module with low power consumption, gold plating is required. The gold plating thickness depends on the current of the accessory module and the number of times of plugging and unplugging. The smaller the current, the more the number of times of plugging and unplugging, and the thicker the gold plating thickness, which brings about an increase in manufacturing costs and process difficulties. Fifth, the gold finger technology requires extremely high accuracy of connection and reliability in complex working conditions. Sixth, in the case of using customized connectors, it will involve a risk of material procurement and supply as well as the problem of later material management.

In view of the above, the present disclosure provides an electrical device and an electrical device system including the electrical device, which can solve one or more of the above problems. The electrical device according to the embodiment of the present disclosure comprises an operating mechanism for implementing an operating function of the electrical device, a control module for controlling the operating mechanism, and an accessory mounting mechanism comprising one or more accessory slots for pluggable mounting of one or more accessory modules. The accessory mounting mechanism comprises a power supply coil connected with the control module for wirelessly supply power to the accessory module under control of the control module after the accessory module is inserted, and the power supply coil is also used to enable communication between the control module and the accessory module while wirelessly supplying power to the accessory module. The electrical device system comprises an electrical device and an accessory module. The accessory module comprises a power receiving coil for receiving wireless power supply from the electrical device through the power supply coil of the electrical device. The electrical device according to the embodiment of the present disclosure wirelessly supplies power to the accessory module, thereby avoiding the defects of wired power supply, such as limitations on the number of times of plugging and unplugging, poor contact, additional electrical insulation requirements and the like.

FIG. 2 shows a schematic block diagram of an electrical device 200 according to an embodiment of the present disclosure.

Referring to FIG. 2, the electrical device 200 according to the embodiment of the present disclosure may include an operating mechanism 210, a control module 220 and an accessory mounting mechanism 230. As mentioned above, the electrical device according to the present disclosure may be any electrical product in the fields of industry, electric power, etc., for example, dual power switch device.

The operating mechanism 210 is used to implement the operating function of the electrical device 200, that is, the operating mechanism 210 is a mechanism for implementing an inherent function of the electrical device 200. For example, the electrical device 200 may be dual power switch device, which is widely used in high-rise buildings, residential quarters, hospitals, airports, docks, firefighting, metallurgy, chemical industry, textiles and other important places where power outage is not allowed, and which can automatically switch to another power supply when one power supply is cut off or fails for some reason. In an example of a dual power switch device, the operating mechanism 210 may be an actuator that performs the power supply switching, which may include an electromagnet, a mechanical arm, and the like. It can be understood that the type of the electrical device and the functions implemented by the operating mechanism can be arbitrary, which does not affect the implementation of the technical solutions and technical effects of the present disclosure.

The control module 220 is used to control the operating mechanism 210. The control module 220 is a control center of the electrical device 200, which can control the operation of the operating mechanism 210 of the electrical device 200, thereby implementing the functions of the electrical device 200. For example, the control module 220 may acquire various signals associated with an operating state of the electrical device 200, such as a power supply voltage signal, a power supply current signal, a power supply exception signal, and the like of the electrical device, and thereafter send an instruction to the operating mechanism 210 for implementing the operating functions of the electrical device 200. In an example of dual power switch device, the control module 220 may detect whether a fault occurs in the current power supply and control the operating mechanism 210 to perform power supply switching in case of failure. The control module 220 can be any form of controller structure, for example, it can be in a form of dedicated hardware or in a form of hardware combined with software. For example, the control module 220 may include a processor (e.g., MCU) and a memory having program instructions or computer codes stored therein for performing the operational functions of the electrical device 200 when the processor executes the program instructions or computer codes. The control module 220 may also be used for other control of the electrical device 200, for example, for controlling of power supply to the accessory module.

The accessory mounting mechanism 230 is used to mount an accessory module, which may include one or more accessory slots. Four accessory slots (accessory slots 231-234) are shown in FIG. 2, but the embodiment of the present disclosure is not limited thereto. The one or more accessory slots are for pluggable mounting of one or more accessory modules. The accessory modules may be various types of extended functions to implement the customization for customers and upgrading and updating of the product. For example, the accessory module may be a dry contact control module, a firefighting module for detecting whether a fire occurs in an application scenario, a current transformer (CT) module, a temperature detection module, and the like. The accessory slots according to the present disclosure may be slots of any form and shape, as long as the accessory module can be pluggable mounted. For example, the accessory slot may be provided with a mechanism capable of better fixing the accessory module, such as a buckle, which can clamp the accessory module after the accessory module is inserted into the slot to implement stable mounting.

In order to supply power to the accessory module, the accessory mounting mechanism comprises power supply coil(s) connected with the control module for wirelessly supplying power to the accessory module under the control of the control module after the accessory module is inserted. The power supply coil(s) is/are also used to implement communication between the control module and the accessory module while wirelessly supplying power to the accessory module. Correspondingly, the accessory module comprises a power receiving coil for receiving power supply and communicating. According to the embodiment of the present disclosure, power supply and communication are carried out between the electrical device and the accessory module wirelessly, without direct contact between the connecting conductor of the electrical device and the connecting conductor of the accessory module. The specific implementation of wireless power supply may adopt various wireless charging technologies, such as Near Field Communication (NFC) technology, Qi standard technology, etc., wherein the NFC technology may adopt small antennas, such as PCB printed antenna, Flexible Printed Circuit Board (FPC) antenna, etc., thereby a compact installation of the accessory modules may be implemented, which is very suitable for the connection of the accessory modules of the electrical device in the embodiment of the present disclosure. The disadvantage of the NFC technology is that the power supply is small, less than 1 watt. However, the inventors of the present disclosure have found that the power consumption of commonly used accessory modules is generally small, usually less than 1 watt, and thus the power supply of the NFC technology is fully competent. According to the embodiment of the present disclosure, the power supply of the accessory module is controlled by the control module 20, for example, by implementing the NFC technology in the control module 20. It should be noted that the control module 20 may integrate the power supply control function and other control functions (for example, the control function for the operating mechanism) into a single controller, or it may comprise a plurality of sub-control modules, which perform different controls respectively, for example, the power supply control function is implemented by a dedicated control circuit or chip.

Taking NFC technology as an example, the working principle of wireless power supply and communication can be described as follows. The operating frequency of charging and communication of NFC technology is 13.56 MHz. After the control module of the electrical device operates, the power supply coil enters a waiting state. When the accessory module is inserted into the accessory slot and close to the power supply coil (for example, at a distance of about 2 mm), the power receiving coil generates induced voltage, and then a DC voltage will be generated through the receiving circuit in the accessory module to supply power to the accessory module, thus implementing the function of short-range wireless power supply. For wireless communication, the NFC receiver/transmitter turns the charging signal into a base wave through a handshake protocol before communication, and then superimposes the communication signal on the base wave, and a transceiver only recognizes the communication signal, so that charging, and communication can be carried out at the same time. The total transmission rate of common accessory modules (for example, dry contact input/output, firefighting, Modbus, LCD, etc.) is not more than 5 KB/s, while the maximum transmission rate of the NFC receiver/transmitter can reach 12 KB/s.

According to the embodiment of the present disclosure, the accessory module is wirelessly modularly connected with the electrical device, avoiding the problem of reliability of traditional connectors. This accessory module is simple to assemble, which is convenient for post-product maintenance and upgrading and updating of the product. Moreover, the non-contact wireless power supply and communication brings about better system insulation, which can avoid the risk of electric shock in case the power supply is a non-isolated system. In addition, according to the embodiment of the present disclosure, a set of coils is shared to implement the functions of wireless power supply and wireless communication at the same time, thus saving design space and cost of coils.

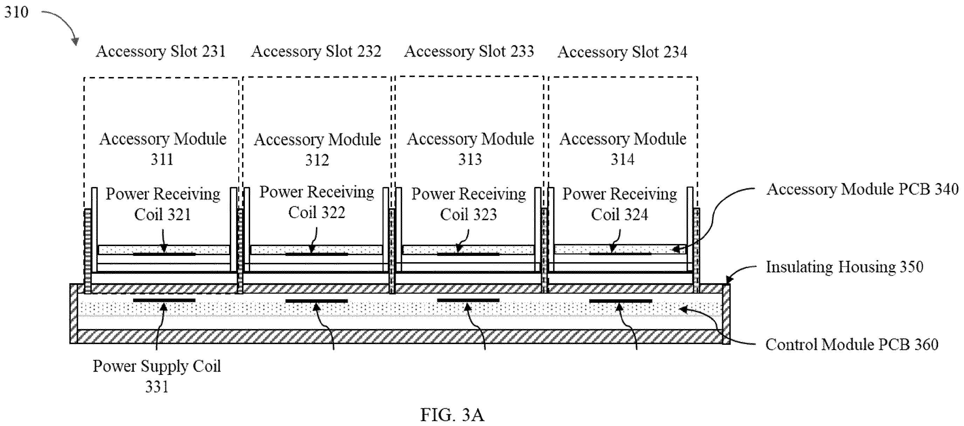

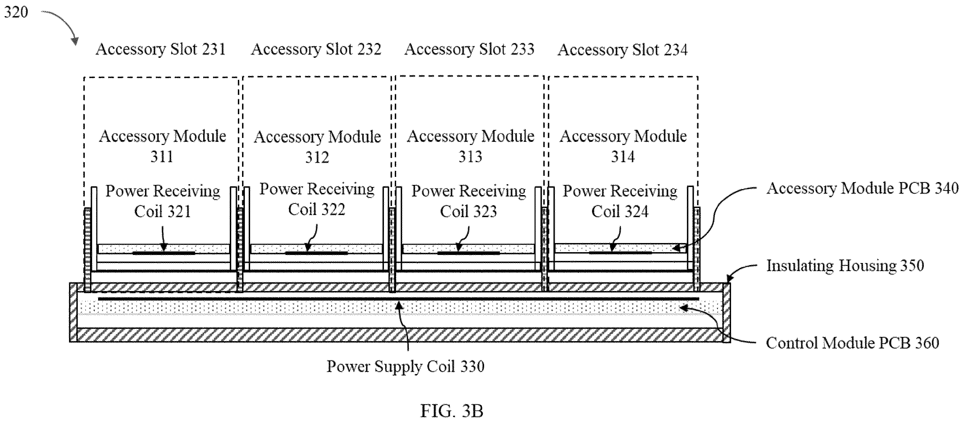

FIGS. 3A and 3B show two structural schematic diagrams of the electrical device and the accessory module, respectively, according to the embodiment of the present disclosure.

In the structure 310 shown in FIG. 3A, the number of the power supply coil(s) is the same as the number of the accessory slots, and each accessory slot has one power supply coil for wireless power supply of one accessory module. In other words, in this structure, the power supply coils of the electrical device are in a one-to-one relationship with the power receiving coils of the accessory modules, with one power supply coil supplying power to one power receiving coil and communicating with it. As shown in FIG. 3A, which exemplarily shows four accessory slots 231-234 for mounting four accessory modules 311-314, respectively, there is one power supply coil (i.e., one of the power supply coils 331-334) under each accessory slot, which corresponds to one of power receiving coils (i.e., one of power receiving coils 321-324) of the accessory module inserted in the slot. Each pair of power supply coils and power receiving coils carries out power supply and communication of one accessory module. In the example structure shown in FIG. 3A, the accessory mounting mechanism of the electrical device is provided with an insulating housing 350 for isolating the power supply coils from the power receiving coils of the accessory module, so that the wear and tear of the power supply coils can be avoided, so as to prevent the maintenance personnel from getting an electric shock or the accessory module from being damaged due to electric leakage. Similarly, the accessory module may also include the insulating housing to protect the power receiving coil of the accessory module. In addition, in this example, the power supply coils are mounted on a PCB board 360 of the electrical device (for example, a control module PCB board of the electrical device), and the power receiving coils are mounted on the PCB board 340 of the accessory module (for example, a main PCB board of the accessory module), so that each pair of the power supply coils and the power receiving coils are opposite. Optionally, the power receiving coil of the accessory module may be a flexible printed circuit board (FPC) coil, which is connected to the main PCB board of the accessory module. In this case, the direction of the power receiving coil can be set more flexibly, so that it is more convenient to align with the power supply coil. For example, the main PCB of the accessory module may be in the vertical direction, and the FPC coil may be bent to the horizontal direction, thereby enabling parallel and aligned with the power supply coil when the accessory module is inserted into the accessory slot.

In structure 310 shown in FIG. 3A, since each accessory module has a separate power supply coil, higher power supply and communication rate can be achieved. However, due to the presence of multiple power supply coils, the structure is complex, and the cost is high. In the structure 320 shown in FIG. 3B, the number of the power supply coil is one and it is used to wirelessly supply power to accessory modules in all accessory slots. As shown in FIG. 3B, the accessory mounting mechanism includes only one power supply coil 330, which is located below the four accessory slots 231-234, covering all accessory slots, and thus it can correspond to the power receiving coils of the accessory modules inserted in all slots, thereby be used for wireless power supply and communication of the accessory modules in all accessory slots. The structure 320 of FIG. 3B employs only one power supply coil 330, which is simple in structure and low in cost, and is especially suitable for accessory modules with low power consumption. In addition, like FIG. 3A, the accessory mounting mechanism of the electrical device has the insulating housing 350 for isolating the power supply coil from the power receiving coil of the accessory module. The accessory module may also include the insulating housing. The power supply coil may be mounted on the PCB board 360 of the electrical device (for example, the control module PCB board of the electrical device), and the power receiving coil is mounted on the PCB board 340 of the accessory module (for example, the main PCB board of the accessory module). Optionally, the power receiving coil of the accessory module may be a flexible printed circuit board (FPC) coil, which is connected to the main PCB board of the accessory module.

Further, the electrical device according to the embodiment of the present disclosure may further include a foreign object indication unit (not shown). The control module 20 detects whether there is a foreign object between the power receiving coil and the power supply coil of the accessory module after the accessory module is inserted, and the control module 20 prompts the user that there is a foreign object through the foreign object indication unit if the foreign object is present. The foreign object, such as dust, oil stain and metal, etc., may fall into the accessory slot of the electrical device. If the foreign object exists and is not cleaned up, the accessory module may not work normally, and in serious cases, it may even lead to the damage of the electrical device or the accessory module. According to the embodiment of the present disclosure, the control module can detect the presence of the foreign object, and when the foreign object is present, the electrical signal transmitted between the power receiving coil and the power supply coil will change, so that it can be detected by the control module. When the control module detects the presence of the foreign object, the user is prompted to clean the foreign object through the foreign object indication unit. The foreign object indication unit may for example be any form of indication unit such as an indicator light, a speaker and the like. In this case, the user can clean up the foreign object in time, thereby ensuring the normal operation of the accessory module.

In another embodiment, the control module of the electrical device may also receive a power supply exception signal from the accessory module through the power supply coil and stop supplying power to the accessory module when receiving the power supply exception signal. For example, the power supply exception signal may indicate that the power supply voltage or the power supply current to the accessory module does not meet a predetermined condition or indicate that the temperature of the accessory module is abnormal. In this embodiment, the accessory module may monitor the power supply voltage, the power supply current and/or the temperature in real-time. When the power supply voltage or the power supply current of the accessory module does not meet the predetermined condition or the temperature of the accessory module is abnormal, the accessory module may provide feedback to the electrical device through the power receiving coil and the power supply coil so that the electrical device may stop supplying power in order to avoid damaging the accessory module. In this case, the electrical device may also indicate to the user through the indication unit to prompt the user to carry out maintenance and restore the power supply after the fault is removed.

The embodiment of the present disclosure also provides an electrical device system, which may include the electrical device and the accessory module as described above. The accessory module includes the power receiving coil for receiving wireless power supply from the electrical device through the power supply coil of the electrical device. The electrical device system may be, for example, a dual power switch device with an accessory module.

As described above, the embodiment of the present disclosure provides a safe, stable and easy-to-maintain electrical device and electrical device system, which wirelessly supplies power to an accessory module, thereby avoiding the defects of wired power supply, such as limitations on the number of times of plugging and unplugging, poor contact, additional electrical insulation requirements and the like.

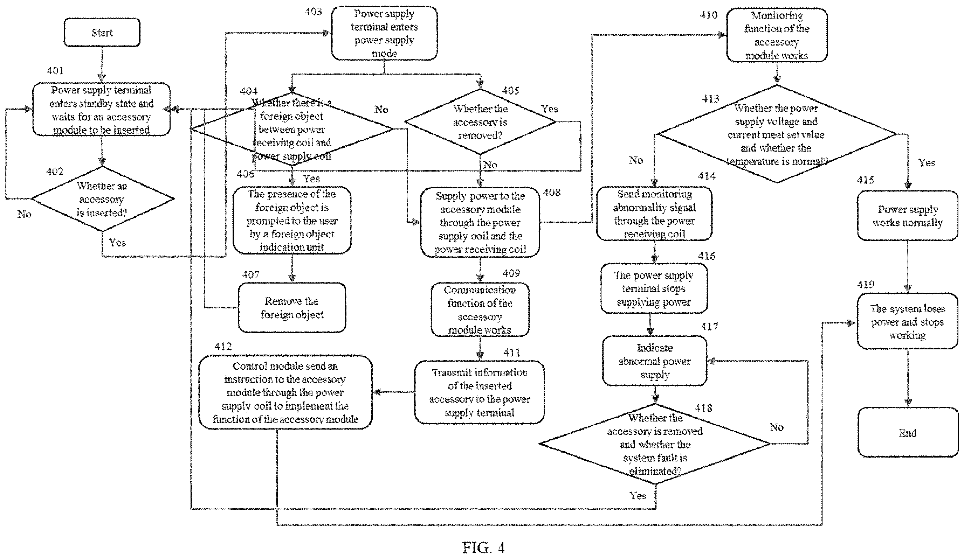

FIG. 4 shows a schematic flowchart of the method of supplying power by the electrical device system according to the embodiment of the present disclosure.

At step 401, the power supply terminal enters a standby state waiting for the accessory module to be inserted into the accessory slot. The power supply terminal represents a power supply function module of the electrical device for the accessory slot, for example, it is composed of a power supply and communication control part of the control module and the power supply coil of the accessory mounting mechanism.

At step 402, the power supply terminal determines whether an accessory is inserted into the accessory slot. If so, step 403 is performed, otherwise return to step 401.

At step 403, the power supply terminal enters the power supply mode, that is, its power supply function is awakened.

At step 404, the control module of the electrical device may detect whether there is a foreign object between the power receiving coil of the accessory module and the power supply coil of the accessory mounting mechanism, and at step 405, the control module of the electrical device may detect whether the accessory is removed, and if so, return to step 401, otherwise perform step 408.

At step 406, the presence of the foreign object is prompted to the user through the foreign object indication unit. After the user removes the foreign object (step 407), return to step 401, and wait for the accessory module to be inserted.

At step 408, if no foreign object is detected, the electrical device supplies power to the accessory module through the power supply coil and the power receiving coil. After the accessory module is powered, the communication function and the monitoring function work (steps 409 and 410).

At step 411, the accessory module transmits information of the inserted accessory to the power supply terminal, such as slot number, accessory type and/or self-checking information of the inserted accessory module.

At step 412, the control module of the electrical device sends an instruction to the accessory module through the power supply coil to implement the accessory function.

At step 413, the accessory module monitors whether the power supply is normal, that is, whether the power supply voltage and current meet the set values and whether the temperature is normal. If the power supply is abnormal, then at step 414, a monitoring exception signal is sent to the power supply terminal through the power receiving coil, and at step 416, the power supply terminal stops supplying power, and the power supply exception is indicated at step 417. If the power supply is normal, the system power supply operates normally (step 415).

At step 418, the control module of the electrical device monitors whether the accessory module is removed and whether the system fault is eliminated. If so, return to step 401 and wait for the accessory module to be inserted, otherwise return to step 417 to continue monitoring.

After the power supply is completed, the electrical system powers down and stops operating (step 419).

The electrical device, the electrical device system, and the method of supplying power of the electrical device system according to the embodiment of the present disclosure have been described above with reference to the accompanying drawings. According to the embodiment of the present disclosure, the accessory module is connected with the electrical device wirelessly, avoiding the problem of reliability of traditional connectors. This accessory module is simple to assemble, which is convenient for the later maintenance and upgrading and updating of the product. Moreover, the non-contact wireless power supply and communication brings about better system insulation, which can avoid the risk of electric shock in case the power supply is a non-isolated system. In addition, according to the embodiment of the present disclosure, a set of coils is shared to implement the functions of wireless power supply and wireless communication at the same time, thus saving design space and cost of coils.

The basic principles of the present disclosure are described above in conjunction with specific embodiments. However, it should be noted that the advantages, benefits, effects, and the like mentioned in the present disclosure are only examples rather than limitations and cannot be considered as necessary for each embodiment of the present disclosure. In addition, the specific details disclosed above are only for the purpose of exemplification and ease of understanding, but not for limitation, and the above details do not limit that the present disclosure must be implemented using the above specific details.

The block diagrams of the devices, apparatuses, equipment, and systems involved in the present disclosure are only illustrative examples and are not intended to require or imply that they must be connected, arranged, and configured in the manner shown in the block diagrams. As will be appreciated by those skilled in the art, the devices, apparatuses, equipment, and systems may be connected, arranged, and configured in any manner. Words such as "including", "containing", "having", and so on are open words, which mean "including, but not limited to" and can be used interchangeably therewith. The words "or" and "and" as used herein refer to the words "and/or" and may be used interchangeably therewith unless the context clearly indicates otherwise. The word "such as" used herein refers to the phrase "such as, but not limited to" and may be used interchangeably therewith.

Various changes, substitutions, and modifications to the techniques described herein may be made without departing from the taught techniques defined by the appended claims. In addition, the scope of the claims of the present disclosure is not limited to the specific aspects of the above-described processing, machines, manufacturing, composition, means, methods, and actions of events. Existing or later-to-be-developed processes, machines, manufactures, compositions, means, methods or actions that perform substantially the same functions or achieve substantially the same results as the corresponding aspects described herein may be utilized. Accordingly, the appended claims include such processing, machines, manufacturing, compositions, means, methods, or actions of events within their scope.

The above description of the disclosed aspects is provided to enable any person skilled in the art to make or use the present disclosure. Various modifications to these aspects will be obvious to those skilled in the art, and the general principles defined herein may be applied to other aspects without departing from the scope of this disclosure. Therefore, the present disclosure is not intended to be limited to the aspects shown herein but is to be accorded the widest scope consistent with the principles and novel features disclosed herein.

The above description has been given for purposes of illustration and description. Furthermore, this description is not intended to limit the embodiments of the present disclosure to the forms disclosed herein. Although several exemplary aspects and embodiments have been discussed above, those skilled in the art will recognize certain variations, modifications, changes, additions, and sub-combinations thereof.

## Claims

1. An electrical device comprising:
an operating mechanism for implementing an operating function of the electrical device;
a control module for controlling the operating mechanism; and
an accessory mounting mechanism including one or more accessory slots for pluggable mounting of one or more accessory modules, wherein
the accessory mounting mechanism comprises power supply coil(s) connected with the control module, the power supply coil(s) is/are used to wirelessly supply power to the one or more accessory modules under the control of the control module after the one or more accessory modules are inserted; and
the power supply coil(s) is/are also used to implement communication between the control module and the accessory module while wirelessly supply power to the accessory module.

2. The electrical device as claimed in claim 1, wherein
the wirelessly supplying power uses Near Field Communication (NFC) technology.

3. The electrical device as claimed in claim 1, wherein
the power supply coil(s) is/are one power supply coil for wirelessly supplying power to the accessory modules in all accessory slots.

4. The electrical device as claimed in claim 1, wherein
the number of the power supply coil(s) is/are the same as the number of the accessory slots, and each accessory slot is provided with one power supply coil for wirelessly supplying power to one accessory module.

5. The electrical device as claimed in claim 1, wherein
the accessory mounting mechanism is provided with an insulating housing for isolating the power supply coil(s) from a power receiving coil of the accessory module.

6. The electrical device as claimed in claim 1, further comprising a foreign object indication unit, wherein
the control module detects whether there is a foreign object between a power receiving coil of the accessory module and the power supply coil(s) after the accessory module is inserted and prompts a user of the presence of the foreign object through the foreign object indication unit in the case the foreign object is present.

7. The electrical device as claimed in claim 1, wherein
the control module is also used to receive a power supply exception signal from the accessory module through the power supply coil, and to stop to supply power to the accessory module when the power supply exception signal is received.

8. The electrical device as claimed in claim 7, wherein
the power supply exception signal indicates that a power supply voltage or current to the accessory module does not meet a predetermined condition or indicates that a temperature of the accessory module is abnormal.

9. The electrical device as claimed in claim 1, wherein
the electrical device is a dual power switch device.

10. An electrical device system comprising:
the electrical device according to any one of claims 1 to 9; and
an accessory module including a power receiving coil for receiving wireless power supply from the electrical device through the power supply coil of the electrical device.

11. The electrical device system as claimed in claim 10, wherein
the power receiving coil of the accessory module is a Flexible Printed Circuit Board (FPC) coil, and the FPC coil is connected to a main PCB of the accessory module.
